# EUROPÄISCHE PATENTSCHRIFT

(11) **EP 1 053 489 B1**
(45) Veröffentlichungstag und Bekanntmachung des Hinweises auf die Patenterteilung: **15.05.2002**
(21) Anmeldenummer: 99900864.2
(22) Anmeldetag: 01.02.1999
(51) Int. Cl.: G02B 3/00, G02B 5/02, G03B 21/62

(54) **OPTISCHE SIGNAL- ODER ANZEIGEVORRICHTUNG**
OPTICAL SIGNALING OR DISPLAY DEVICE
DISPOSITIF OPTIQUE DE SIGNALISATION ET D'AFFICHAGE

(30) Priorität: 04.02.1998 EP 98810082
(43) Veröffentlichungstag der Anmeldung: 22.11.2000
(73) Patentinhaber: ims Industrial Micro Systems AG, 8406 Winterthur (CH)
(72) Erfinder: MERLATO, Sandro, CH-8404 Winterthur (CH); FREI, Albert, CH-8542 Wiesendangen (CH)
(74) Vertreter: Patentanwälte Breiter + Wiedmer AG
(86) Internationale Anmeldenummer: CH9900042
(87) Internationale Veröffentlichungsnummer: WO9940459

(56) Entgegenhaltungen:
- EP-A- 0 172 454
- EP-A- 0 726 554
- WO-A-96/24802
- WO-A-97/26483
- DE-A- 3 148 243
- DE-A- 3 500 728

## Beschreibung

Die Erfindung bezieht sich auf ein Verfahren zum Überwachen der Lichtstärke einer gattungsgemässen optischen Signal- oder Anzeigevorrichtung mit einem rasterförmigen Leuchtfeld. Weiter betrifft die Erfindung eine optische Signal- oder Anzeigevorrichtung zur Durchführung des Verfahrens, mit einem gerasterten Leuchtfeld einer räumlich definierten Lichtstärkeverteilung, welche Vorrichtung mit einem Gehäuse eine auf einer Printplatte angeordnete Matrix von einzeln, gruppenweise oder gesamthaft steuerbaren Lichtquellen, insbesondere LED, und eine sich über das ganze Leuchtfeld erstreckende, aussen ebene Streulinse, in welcher innenseitig parallel verlaufende Nuten mit wenigstens teilweise asymmetrisch gekrümmter Oberfläche ausgebildet sind. Ein Linsensystem umfasst wenigstens eine Linse.

Bekannte gerasterte Leuchtfelder bestehen insbesondere bei Verkehrssignalen, aus lichtstarken Leuchtpunkten, welche - in bezug auf die Auflösung durch den Raster bestimmt - alle Verbote, Gefahren und Hinweise, lichtstark signalisiert werden, stationär oder wandemd. Dies erfolgt in Form von Bildern und/oder Texten. Die punktförmigen Lichtquellen sind insbesondere:
- In einer lichtemittierenden Diode, LED genannt, können Ladungsträger in einem in Durchlassrichtung betriebenen pn-Übergang hohe Energiewerte annehmen, die sie in Gestalt von Lichtquanten wieder abgeben. Das erzeugte Licht ist nahezu monochromatisch und abhängig vom Halbleitermaterial und dessen Dotierung. LED, beispielsweise aus GaP, GaAs oder GaAsP, emittieren diskrete Wellenlängen im roten, grünen und gelben Spektralbereich (660 bis 550 nm).
- Mit der Glasfasertechnologie kann das Licht einer einzelnen Lampe zum Leuchtfeld geleitet werden. Bei einer Rot-Gelb-Grün-Signalisation werden pro Rasterpunkt drei Glasfibern benötigt.

Im allgemeinen wird zur Erzeugung eines rasterförmigen Leuchtfeldes die LED-Technologie vorgezogen, sie ist weniger störungsanfällig, bezüglich der Lichtquelle von grösserer Lebensdauer und hat einen geringeren Energie- und Wartungsbedarf als die Glasfasertechnologie.

In der DE,A1 2702823 wird erstmals eine elektrisch beleuchtete Signalvorrichtung beschrieben, welche ein Leuchtfeld mit einer Vielzahl von LED und eine durchscheinende oder durchsichtige Abdeckung aufweist. Jeder LED ist eine sphärisch ausgebildete Kalotte einer sich über das ganze Leuchtfeld erstrekkenden Linse zugeordnet. Mit dieser Lösung werden lichtstarke Verkehrssignale erhalten, welche Gehäuse wesentlich geringerer Tiefe zulassen. Es sind jedoch weiterhin Blenden erforderlich, wenn in bestimmten Blickrichtungen keine oder eine geringere Sichtbarkeit erwünscht oder erforderlich ist.

In der EP,A2 0694894 wird eine den Gegebenheiten angepassten Lichtstärkeverteilung angestrebt, ohne dass dafür aufwendige und teure Linsensysteme notwendig sind. Dies wird dadurch erreicht, dass zumindest ein Teil der LED innerhalb der Signalleuchte von einer ersten zu zumindest einer zweiter Abstrahlrichtung abkippbar gehaltert und durch eine Verstelleinrichtung positionierbar ist. Die gewünschte Abstrahlrichtung wird durch geradlinige oder drehende mechanische Verschiebungselemente erreicht. Dadurch kann eine den Bedürfnissen der Verkehrsteilnehmer weitgehend entsprechende Lichtstärkeverteilung erzielt werden. Es müssen jedoch mechanisch bewegliche Teile inkauf genommen werden, was mittel- und langfristig meist aufwendig oder gar nachteilig ist.

Die WO,A 96/24802 offenbart prismatische torroidale Linsen und ein Verkehrssignal mit einem Leuchtfeld aus LED. Jede LED beinhaltet eine Linse mit einer parabolförmig ausgebildeten lichtbrechenden Oberfläche und einer äusseren lichtbrechenden Oberfläche. Die äussere Oberfläche hat eine ringförmig ausgebildete äussere und eine zentrale Region. Mit dieser speziellen Ausführungsform der individuell jeder LED zugeordneten Linsen wird eine bestimmte räumlich definierte Lichtstärkeverteilung erreicht. Mit dieser wabenförmigen Anordnung einer Matrix zahlreicher, verhältnismässig komplizierter Linsen wird das Ziel einer räumlich definierten Lichtstärkeverteilung auf verhältnismässig aufwendige Art erreicht.

Die WO,A 97/26483 zeigt eine Lampenanordnung, welche eine Linse umfasst, die das Licht zur Erfüllung bestimmter Verkehrsvorschriften in eine wünschbare Richtung lenken kann. Diese Linse arbeitet in Kombination mit speziellen LED, damit das von innen abgestrahlte Licht wirksam abgelenkt werden kann. Auffallend ist die Ausbildung von in regelmässigen Abständen angeordneten, parallel verlaufenden Nuten im Innenbereich der Streulinse. Der Bereich zwischen den Nuten ist in zwei Teilbereiche aufgeteilt. Ein erster Teilbereich ist eben oder gewölbt ausgebildet ein zweiter Teilbereich weist quer zur Längsrichtung der Nuten verlaufende Rillen auf.

In der DE, A1 3148243 wird eine Ansteuerung einer Ziffernanzeige einer Verkehrsampel mit Rot-, Grün- und Gelbphase offenbart, wobei die Ziffemanzeige die Restdauer der Rotlichtphase rückwärtsfaufend anzeigt. Die Lichtemission der Lichtquellen wird mit Sensoren überwacht und zum Ansteuem der Zifferanzeige verwendet. Ein rasterförmiges Leuchtfeld und eine Überwachung der Lichtstärke der Lichtquellen werden nicht erwähnt.

Die Erfinder haben sich die Aufgabe gestellt, ein Verfahren und eine Vorrichtung der eingangs genannten Art zu schaffen, welche die Bedürfnisse aller Beobachter mit bezug auf die räumliche Lichtstärkeverteilung auf einfache, optimale Weise erfüllen, ohne dass störungsanfällige Mechanismen oder komplexe Anordnungen von speziellen Einzellinsen vorgesehen werden müssen. Weiter soll das latente Bedürfnis, die Lichtstärke insbesondere einer alternden optischen Signal- oder Anzeigevorrichtung laufend zu überwachen, um bei einem kritischen Unterschreiten des Sollwertes sofort eingreifen zu können, erfüllt werden.

In bezug auf das Verfahren wird die Aufgabe erfindungsgemäss nach dem Kennzeichen von Patentanspruch 1 gelöst. Spezielle und weiterbildende Ausführungsformen der Vorrichtung sirid Gegenstand von abhängigen Patentansprüchen.

Ein Leuchtfeld eines Verkehrssignais ist beispielsweise rund ausgebildet und hat vorzugsweise SMT- oder Chip on Board-LED. Der Durchmesser eines Leuchtfeldes liegt zweckmässig bei etwa 200 mm, er kann jedoch für grössere Signale auch etwa 300 mm betragen und eine entsprechend grössere Zahl LED haben. Entsprechend dimensioniert sind beispielsweise dreieckförmige und quadratische Leuchtfelder.

Die LED sind in an sich bekannter Weise auf einer Printplatte angeordnet Jede LED kann weisses oder ein bestimmtes farbiges Licht ausstrahlen. Weiter kann eine mehrteilig ausgebildete LED auch mehr als eine Farbe abstrahlen, beispielsweise rot und gelb, rot und grün oder gelb und grün. Dreiteilige LED können alle drei Farben, beispielsweise rot, gelb und grün abstrahlen, welche für Verkehrsleitungssignale erforderlich sind.

Bei praktisch allen optischen Signal- oder Anzeigevorrichtungen ist es erwünscht, dass die Lichtstärkeverteilung energetisch optimiert und benutzergerecht erfolgt Insbesondere bei Verkehrssignalen nützen nach oben und stark seitlich abgegebene Lichtstrahlen praktisch nichts oder wirken sogar störend. Die Lichtstrahlen werden horizontal bzw. nach unten gebündelt, wodurch bei gleichem Energieverbrauch eine wesentlich höhere Lichtstärke erreicht wird. Eine optimale Lichtstärkeverteilung in Prozent für Leuchtfelddurchmesser von 200 und 300 mm ist in DIN 67527 Teil 1 normiert. Oberhalb eines vertikalen Winkels von +3° und unterhalb -10° ist die Lichtstärke sehr gering, ebenfalls bei seitlichen Winkeln, die grösser als ±20° sind. Ohne Abschirmblenden sieht der Autofahrer ein Verkehrssignal in optimaler Distanz in vergrösserter Lichtstärke, auf einer Nebenstrasse oder aus einem benachbart der Strasse liegenden Wohnhaus dagegen wird das Signal der Hauptstrasse kaum bemerkt.

Verschiedene Ursachen können die Leuchtintensität einer optischen Signal- oder Anzeigevorrichtung vermindern, beispielsweise das Alter oder eine Beschichtung der transparenten Aussenlinse bzw. dem Deckglas mit Staub und/oder Schmutz. Damit für den Benutzer immer ein eindeutiger Betriebszustand garantiert werden kann, wird die Leuchtintensität erfindungsgemäss optisch überwacht, dabei wird die von den LED abgegebene Lichtintensität im Gehäuse, auch Verschlussdeckel genannt, der optischen Signal- und Anzeigevorrichtung durch dort angeordnete Sensoren detektiert und in vorzugsweise elektrische Signale umgewandelt. Ein Mikroprozessor vergleicht die Signale mit vorgegebenen Soll-Werten.

Massnahmen werden beispielsweise durch die innerhalb oder ausserhalb der optischen Signal- und Anzeigevorrichtung angeordnete Efektronik, z.B. einem Mikroprozessor, eingeleitet, wenn ein Schwellenwert von beispielsweise wenigstens etwa 30%, insbesondere im Bereich von 40 bis 60%, des Soll-Wertes unterschritten wird. Auf entsprechende Weise wird zum Beispiel die elektrische Leistung zurückgenommen, wenn diese nach einer Reinigung des Signals nicht mehr in dieser Höhe erforderlich ist. Ein Vorwarnung kann optisch und/oder akustisch in einer Kommandozentrale erfotgen. Erfolgt die Störungsbehebung nicht innerhalb von relativ kurzer Zeit, wird die Anlage abgestellt, bzw. bei einer Verkehrsampel auf gelbes Blinklicht geschaltet. Einfachere Signalanlagen können ohne Vorwarnung oder Erhöhung der elektrischen Leistung abgestellt werden, wenn der Schwellenwert nicht mehr erreicht wird.

Das erfindungsgemässe Verfahren zum Überwachen der Lichtstärke ist unter Anwendung fachmännischen Wissens in allen optischen Signal- oder Anzeigevorrichtungen mit einem rasterförmigen Leuchtfeld anwendbar.

Bezüglich der Vorrichtung zur Durchführung des Verfahrens wird die Aufgabe erfindungsgemäss nach dem Kennzeichen von Anspruch 3 gelöst. Spezielle und weiterbildende Ausführungsformen der optischen Signal- und Anzeigevorrichtung sind Gegenstand von alifälligen Ansprüchen.

Alle Linsen bestehen wegen der guten Bearbeitbarkeit insbesondere aus einem transparenten Kunststoff oder aus Plexiglas. Linsen aus konventionellem Glas oder aus einer Keramik können den Erfindungszweck durchaus erfüllen, sind jedoch wesentlich schwerer bearbeitbar und deshalb auch teurer.

Insbesondere bei weisses Licht ausstrahlenden LED können die Linsen homogen oder sektorweise eingefärbt sein und so einen Teil des weissen Lichtes ausfiltern, wodurch das ursprünglich weisse Licht farbig erscheint Bei farbiges Licht ausstrahlenden LED und/oder mehreren Linsen können auch ganze Farbkombinationen zusammengestellt werden.

Die Streulinse wird mit nach aussen, d.h. in von den LED wegweisenden Richtung, mit der glatten Seite montiert Dies erleichtert Reinigungsarbeiten bei Staub und Schmutz. Überdies kann so die Streulinse auch als Deckscheibe fungieren, was jedoch bei Bedarf die zusätzliche Anordnung einer solchen Deckscheibe nicht verhindern soll. Die innenliegenden, parallel verlaufenden Nuten erstrecken sich über die ganze Streulinse, jedoch mindestens bis zu einen ringfönnigen Randbereich. Die Nuten sind wenigstens teilweise mit einem derart gekrümmten Querschnitt, allenfalls auch mit einer planen Teilfläche, ausgebildet, dass die von den LED ausgesandten Lichtstrahlen in einer Lichtstärkeverteilung abgelenkt werden, die weitgehend DIN 67527 Teil 1 entspricht. Die optimale Geometrie des Nutenquerschnitts und der die Nuten verbindenden ebene Fläche werden empirisch durch Versuche und Rechnungen festgelegt Ein erfindungswesentliches Merkmal ist die Asymmetric, ein Teil des von den LED abgegebenen Lichtes wird umgelenkt und addiert sich zum nicht ungelenkten Licht. Dadurch kann ein Verstärkungsfaktor von bis zu 2 erreicht werden. In diesem Fall wird die Streulinse auch Verdopplerlinse genannt.

Nach einer vorteilhaften Ausführungsform der Erfindung kann eine Zwischenlinse angeordnet werden, welche das von den LED abgegebene Licht sammelt und es der aussenliegenden Streulinse zuführt. Dadurch kann eine breite Abstrahlcharakteristik erreicht werden. Beim Einsatz von mehreren Linsen werden diese vorzugsweise auf einem gemeinsamen Basisträger integriert.

Wie aus den vorstehenden Ausführungen bereits hervorgeht, liegt die hauptsächliche Verwendung der optischen Signal- oder Anzeigevorrichtung im Schienen- und Strassenverkehr, als Verkehrssignal oder Verkehrsampel, zur Ausführung aller gesetzlich vorgeschriebenen oder verordneten Signalisationen von
- Vorschriften, wie Rot-Gelb-Grün-Verkehrsleitung, Geschwindigkeitsbeschränkungen und Überholverbote,
- Gefahren, wie Höhenbeschränkungen unter Brücken und Schleudergefahr, und
- Hinweisen mit stationären oder wandernden Bildern und/oder alphanumerischen Texten, wie die Anzeige von Spurwechseln durch wandernde Pfeile, die Vorwarnung vor Strassenbauarbeiten, Tunneln, Vereisungen oder Windstössen,
können ferngesteuert gut sichtbar und prägnant dargestellt werden.

Neben der Neuausrüstung können die erfindungsgemässen optischen Signal- und Anzeigevorrichtungen auch für eine Umrüstung verwendet werden, wobei die niedrige Leistungsaufnahme von 8 bis 12 W durch Einschaltung eines ohmschen Verbrauchers erreicht werden kann. Mit dieser niedrigen Leistungsaufnahme kann eine Lichtstärke von beispielsweise etwa 500 cd erreicht werden, unter Nutzung einer Lichtverteilung gemäss DIN 67527 Teil 1. Die für LED übliche Lebensdauer von über 10 Jahren kann ohne weiteres erreicht werden.

Die erfindungsgemässe Vorrichtung kann aber nicht nur im Verkehr, sondern auch an und in Gebäuden, insbesondere öffentlichen Gebäuden an Liften und Rolltreppen, an Skiliften usw. als Anzeigevorrichtung verwendet werden.

Die Erfndung wird anhand von in der Zeichnung dargestellten Ausführungsbeispielen, welche auch Gegenstand von abhängigen Patentansprüchen sind, näher erläutert. Es zeigen schematisch:
- Fig. 1 eine Ansicht einer scheibenförmigen Printplatte mit eingesetzten LED und einer dahinterliegenden Streulinse,
- Fig. 2 einen vertikalen Diagonalquerschnitt von Fig. 1,
- Fig. 3 den Strahlengang in einem vergrösserten Ausschnitt von Fig. 1,
- Fig. 4 eine Ansicht einer als Sammellinse ausgebildeten Zwischenlinse,
- Fig. 5 einen vertikalen Diagonalquerschnitt durch eine Zwischenlinse gemäss Fig. 4, mit Printplatte und Streulinse,
- Fig. 6 einen Strahlengang durch einen vergrösserten Ausschnitt gemäss Fig. 4,
- Fig. 7 einen Strahlengang mit reflektiertem Licht,
- Fig. 8 die Ausbildung eines Reflektorkamms gemäss Fig. 7,
- Fig. 9 ein Verkehrssignal mit einer LED- und Linsenanordnung und einem innen reflektierenden Gehäuse und Sensoren,
- Fig. 10 einen Strahlengang einer LED auf einer transparenten Printplatte,
- Fig. 11 eine Ausführungsform der Streulinse,
- Fig. 12 einen vertikalen Querschnitt durch eine Streulinse gemäss Fig. 11, und
- Fig. 13 ein vergrössertes Detail mit Nuten gemäss Fig. 12.

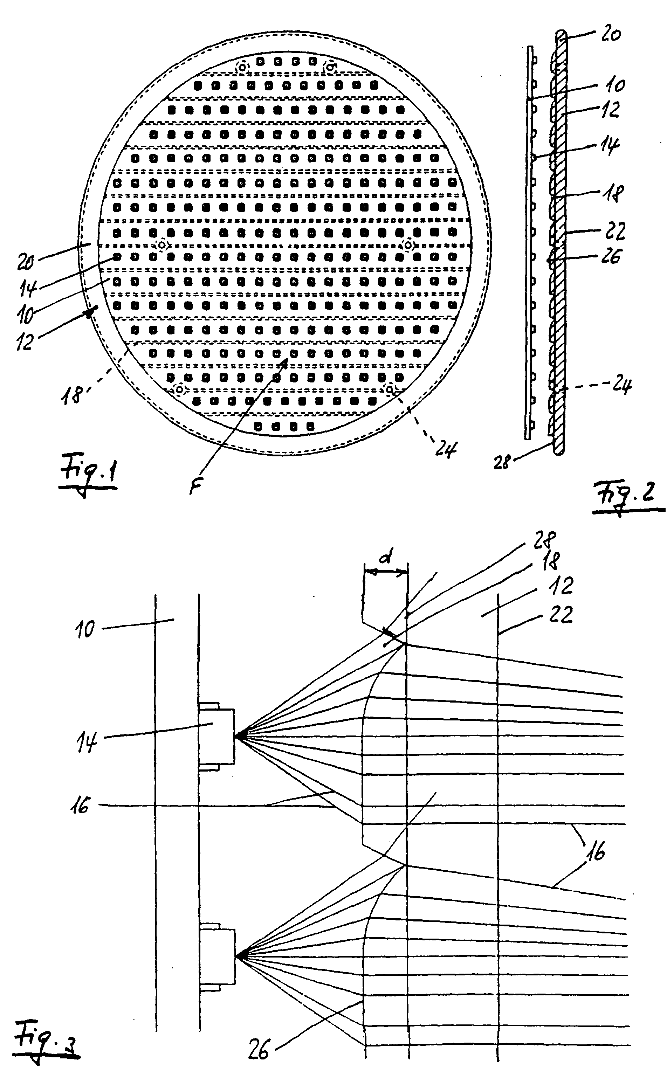

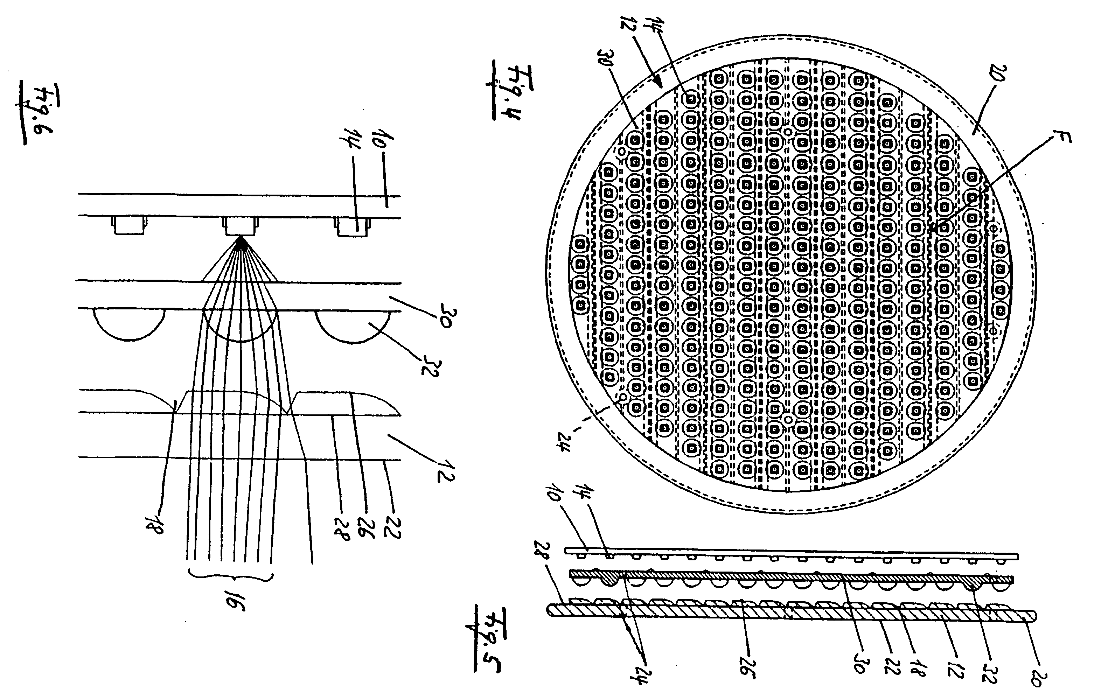

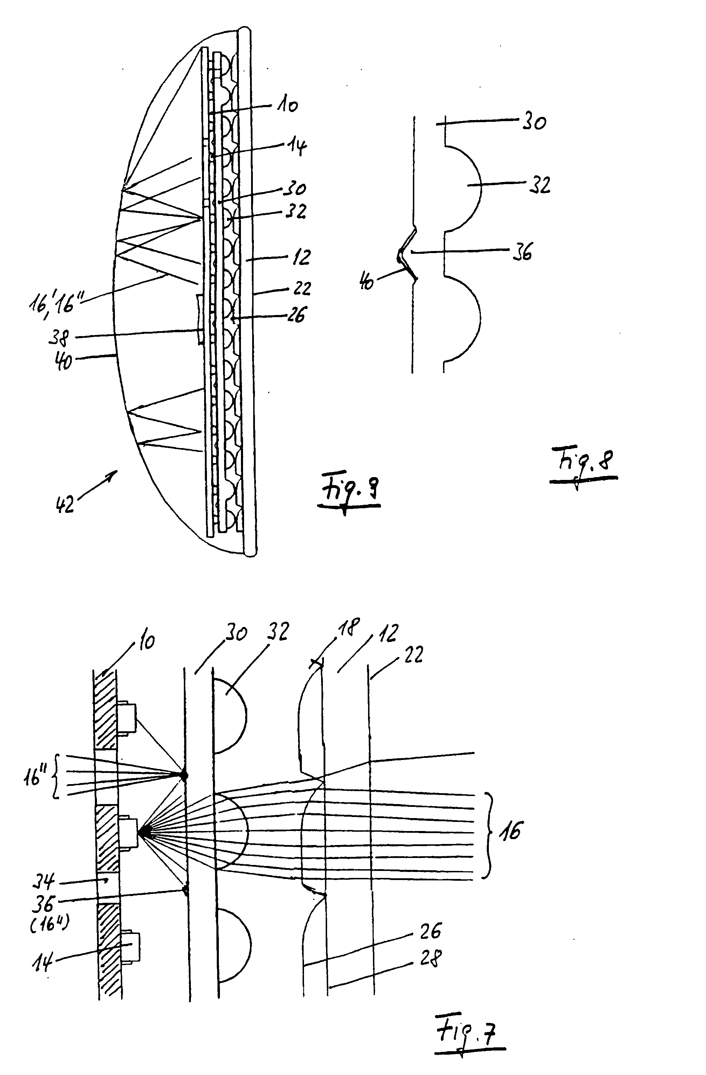

Ein in Fig. 1 und 2 dargestelltes Einlinsenkonzept zeigt zwei benachbart parallel angeordnete Scheiben, eine Printplatte 10 und eine Streulinse 12. In einem weitgehend quadratischen Raster sind auf der Printplatte 10 matrixartig 242 LED 14 angeordnet, welche ein rundes Leuchtfeld F bilden und in Richtung der Streulinse Lichtstrahlen 16 (Fig. 3) mit einem begrenzten Abstrahlwinkel aussenden. Die LED sind zweckmässig mit der sogenannten "Surface Mount Technology" (SMT) auf der Printplatte 10 befestigt. Die Printplatte an sich ist in dem Fachmann bekannter Weise ausgebildet.

Die Streulinse weist in dem Raster für die LED 14 entsprechenden Abständen parallele Nuten 18 auf, welche in Richtung der LED 14 ausgebildet sind. Diese Nuten 18 enden an einem umlaufenden Rand 20 der Streulinse 12. Die Streulinse 12 wird auch Verdopplerlinse genannt, weil sie bevorzugt die Lichtstärke der unteren Hälfte der optischen Signal- oder Anzeigevorrichtung verdoppelt. Die von den LED 14 abgewandte Oberfläche 22 ist eben ausgebildet und leicht zu reinigen.

Die Streulinse 12 ist von sechs Schraubenlöchern 24 durchgriffen, welche der Halterung der Linse mit Haltebolzen dienen.

In Fig. 3 ist der Strahlengang der von zwei LED 14 ausgesandten Lichtstrahlen 16 dargestellt. Die Lichtstrahlen 16 werden an der den LED 14 zugewandten Oberfläche 26, der inneren Oberfläche, gebrochen und treten dann in die Streulinse 12 ein.

Diese innere Oberfläche 26 verläuft, von unten beginnend beschrieben, vorerst parallel in einem Abstand d zur glatten Oberfläche 22 der Streulinse. Dann verläuft sie unter Bildung einer Nut 18 nach innen gekrümmt in einen spitzen Winkel auf der vom umlaufenden Rand 20 gebildeten virtuellen Ebene 28. Nach dem spitzen Winkel verläuft die innere Oberfläche 26 eben, bis sie im Abstand d von beispielsweise etwa 2 mm wieder auf der zur Oberfläche 22 parallelen Ebene verläuft. Mit beginnender Krümmung wird die nächste Nut 18 gebildet.

Im Bereich der Krümmung der inneren Oberfläche 26 werden die Lichtstrahlen 16 so gebrochen, dass sie sich in einem vorausbestimmten Abstand mit den durch den ebenen, parallel zur Oberfläche 22 verlaufenden Teil der Oberfläche 26 gebrochenen Lichtstahlen 16 überlagern und so das Leuchtfeld F (Fig. 1) in der unteren Hälfte heller erscheinen lassen.

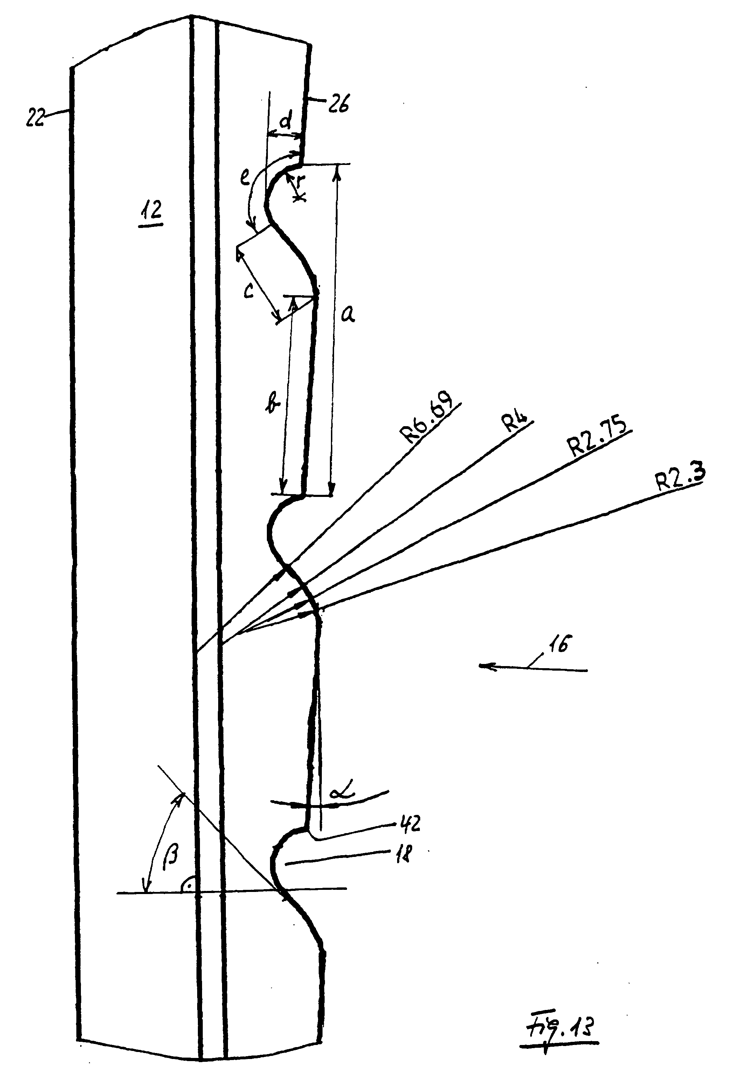

Auf der inneren Oberfläche 26 können, nicht dargestellt, auch Reflexionskämme 40 (Fig. 7, 8) oder dgl. ausgebildet sein.

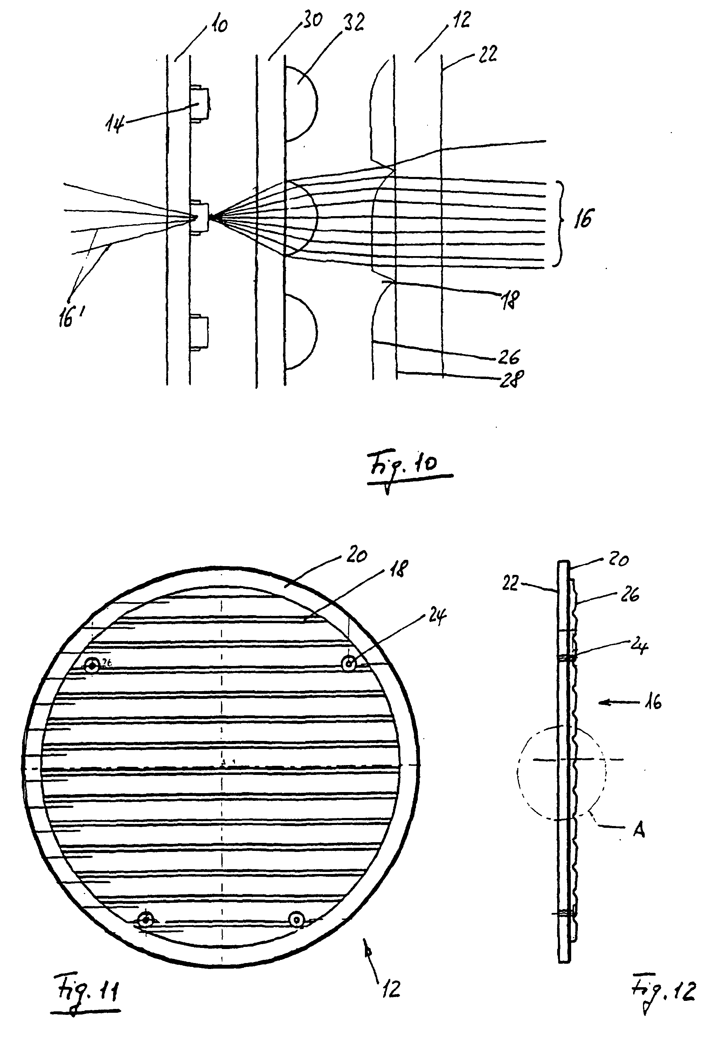

Im Linsensystem gemäss Fig. 4, 5 ist zwischen der Printplatte 10 und der Streulinse 12 eine parallel verlaufende Zwischenlinse 30, eine Sammellinse, angeordnet. In Richtung der Streulinse 12 sind sphärische Kalotten 32 ausgebildet. Der Mittelpunkt der Kalotten 32 liegt in der Mittelsenkrechten der LED 14, mit andern Worten haben die sphärischen Kalotten 32 den gleichen Raster wie die LED 14.

Die Bohrungen 24 der beiden Linsen sind koaxial angeordnet, mit einem Distanzbolzen oder einer Schraube pro Bohrung und Abstandhaltem kann das Linsensystem fixiert werden, beide Linsen 12, 30 sind auf einem Basisträger integriert.

Der Strahlengang eines Linsensystems gemäss Fig. 4, 5 ist in Fig. 6 dargestellt. Jede sphärische Kalotte 32 bricht die Lichtstrahlen 16 der zugeordneten LED 14 und leitet die Lichtstrahlen 16 zur Streulinse 12 weiter, wo der Effekt gemäss Fig. 3 eintritt. Deshalb können auch LED 14 mit breiter Abstrahl-charakteristik eingesetzt werden.

Fig. 7 entspricht bezüglich des hauptsächlichen Strahlengangs im wesentlichen Fig. 6. Zwei wesentliche Unterschiede sind zu erkennen:
- Die Printplatte 10 aus einem im Bereich der LED 14 lichtundurchlässigen Trägermaterial hat gelochte, d.h. transparente Zonen 34, welche zwischen den LED 14 streifenförmig ausgebildet sind. Das lichtundurchlässige rägermaterial besteht beispielsweise aus einer Keramik, das transparente Material aus Kunststoff, Plexiglas, Glas oder Keramik.
- Auf der von den sphärischen Kalotten 32 abgewandten Seite der Zwischenlinse 30 sind Reflexionskämme 36 ausgebildet, welche hier parallel zu den Kalotten 32 verlaufen. Es können 1,2 oder mehrere Reflexionskämme ausgebildet sein.

Die an den Reflexionskämmen 36 abgelenkten Lichtstrahlen 16 können durch die transparenten Zonen 34 der Printplatte 10 durchtreten und als Lichtstrahlen 16" zu Sensoren 38 (Fig. 9) gelangen, wo sie detektiert und der Auswertung zugeführt werden.

Nach nicht dargestellten Varianten können anstelle von Reflexionskämmen 36 auch andere, an sich bekannte Reflexionselemente eingesetzt werden, welche abgelenkte Lichtstrahlen 16 durch die Printplatte 10 reflektieren.

In Fig. 8 ist eine Variante bezüglich der Ausbildung eines Reflexionskamms 36 auf einer Zwischenlinse 30 gezeigt, welcher die Form eines stumpfwinkligen, gleichschenkligen Dreiecks zeigt. Auf den Schenkelflächen auftretende Lichtstrahlen 16 (Fig. 7) würden nicht reflektiert, sondern gebrochen. Deshalb ist der Reflexionskamm 36 gleichmässig mit einer reflektierenden Schicht 40 bedeckt, welche die Penetration der Lichtstrahlen 16 verhindert. Die Schicht 40 besteht beispielsweise aus Aluminium, Chrom, Silber oder aus einem anderen, an der Luft nicht anlaufenden, korrosionsfesten Metall.

Ein in Fig. 9 dargestelltes Verkehrssignal hat eine LED- und Linsenanordnung gemäss Fig. 5. Die Streulinse 12 bzw. deren Oberfläche 22 wirkt gleichzeitig als Deckscheibe. Ein deckelartiges Gehäuse 42 hat bevorzugt eine glänzende Innenschicht 40 und wirkt gleichzeitig als Reflektor für nach hinten abgelenkte oder nach hinten ausgesandte Lichtstrahlen 16' und 16". Auf der Rückseite der Printplatte 10 sind vorzugsweise zwei bis vier Sensoren 38 eingebaut, welche nach hinten abgelenkte oder ausgesandte Lichtstrahlen 16' und 16" detektieren und in elektrische Impulse umwandeln, welche zur Auswertung zu einem nicht dargestellten Mikroprozessor geleitet werden. Ein solcher Mikroprozessor kann innerhalb oder ausserhalb des Gehäuses 42 angeordnet sein.

Auch das in Fig. 10 dargestellte Linsensystem entspricht im wesentlichen Fig. 6. Die Printplatte 10 ist jedoch vollständig transparent ausgebildet und besteht aus einem Kunststoff. Die LED 14 strahlt auch nach hinten Lichtstrahlen 16' ab, welche die transparente Printplatte durchdringen und gemäss Fig. 9 von Sensoren 38 detektiert werden.

Nach einer nicht dargestellten, jedoch offensichtlichen Variante können auch gemäss Fig. 10 die in Fig. 8 dargestellten Reflexionskämme 36 an der Zwischenlinse 30 vorgesehen sein, welche dank der metallischen Beschichtung 40 einen kleinen Teil der Lichtstrahlen 16 durch die transparente Printplatte 10 reflektieren.

In Fig. 11 und 12 ist eine kreisförmige Streulinse 12 mit einem Durchmesser von 200 mm dargestellt. Die Blickrichtung ist mit der Penetrationsrichtung der Lichtstrahlen 16 (Fig. 10) identisch. Die parallel angeordneten Nuten 18 enden im umlaufenden Rand 20. Vier Schraubenlöcher 24 durchgreifen die Streulinse 12. Der in Fig. 12 strichpunktiert eingekreiste Bereich A ist in Fig. 13 vergrössert dargestellt.

In dieser Fig. 13 ist der Verlauf der inneren Oberfläche 26 von wesentlicher Bedeutung. In einem Abstand a, vorzugsweise 10 bis 15 mm, sind Nuten 18 einer Tiefe d von bevorzugt 1 bis 3 mm angeordnet. Im Detail verläuft die innere Oberfläche 26 der Streulinse 18 wie folgt:
- Im Bereich b zwischen den Nuten 18 ist die Oberfläche 26 plan ausgebildet, sie verläuft mit Bezug auf die äussere Oberfläche 22 leicht abgewinkelt, vorzugsweise mit einem Winkel α bis etwa 10°, insbesondere 3 bis 6°. Gemäss Fig. 13 liegt der Winkel α bei etwa 4°.
- Bezüglich der montierten Streulinse 12 von unten geht die innere Oberfläche 26 nach dem planen Bereich b kontinuierlich in einen Bereich c mit progressiv zunehmendem Krümmungsradius R über. Bei den in Fig. 13 vorliegenden geometrischen Verhältnissen mit einer Dicke der Streulinse 12 von etwa 9 mm, einer Nuttiefe d von etwa 2 mm und einem Nutenabstand von etwa 13 mm, ist der Bereich c der progressiven Zunahme des Krümmungsradius R etwa 5 mm lang. Die Radien R der Krümmung vergrössem sich auf dieser Länge von 2,3 mm über 2,75 mm und 4 mm auf 6.69 mm. Der Bereich c endet, wenn der Tangentialwinkel β einen vorgegebenen Wert von vorzugsweise 40 bis 50° erreicht hat, im vorliegenden Fall etwa 45°.
- Nach dem Bereich c geht die innere Oberfläche 26, ebenfalls kontinuierlich, in einen zylindermantelförmigen Bereich e über, welcher einen Radius r von vorzugsweise etwa 1 bis 3 mm, im vorliegenden Fall etwa 1,5 mm hat.
- Der zylindermantelförmige Bereich e schneidet den nächsten plan ausgebildeten Bereich b in einem stumpfen Winkel. Die Schnittlinie 42 ist zweckmässig angefast oder abgerundet.

## Patentansprüche

1. Verfahren zum Überwachen der Lichtstärke einer optischen Signal- oder Anzeigevorrichtung, die eine Vielzahl von auf der Vorderseite einer Printplatte (10) angeordnete Lichtquellen (14) in einem rasterförmigen Leuchtfeld (F) sowie eine in der hauptsächlichen Lichtemissionsrichtung der Lichtquellen angeordnete Streulinse (12) oder eine in Folge angeordnete lichtsammelnde Zwischenlinse (30) und eine Streulinse (12) aufweist,
**gekennzeichnet durch** die Verfahrensschritte:
Verwenden einer wenigstens teilweise transparenten Printplatte (10) für die Anordnung der Lichtquellen (14);
Anordnen von Sensoren (38) zum Detektieren von Licht auf der Rückseite dieser Printplatte (10);
Detektieren der von den Lichtquellen (14) nach rückwärts zur Printplatte (10) hin emittierten Lichtstrahlen (16') und/oder Detektieren der an der Zwischenlinse (30) oder bei deren Fehlen an der Streulinse (12) reflektierten und die Printplatte penetrierenden Lichtstrahlen (16");
Umwandlung der detektierten Lichtstrahlen (16', 16") in Signale, die zu einer Elektronik weitergeleitet werden;
Auslösen einer Aktion wie Erhöhung der elektrischen Leistung, Vorwarnung und/oder Abschalten **durch** die Elektronik bei Unterschreiten eines vordefinierten Schwellenwertes der Signale.

2. Verfahren nach Anspruch 1, **dadurch gekennzeichnet, dass** der Schwellenwert zum Auslösen einer Aktion bei wenigstens etwa 30% des vorgegebenen Soll-Wertes liegt, vorzugsweise im Bereich von 40 bis 60%.

3. Optische Signal- oder Anzeigevorrichtung zur Durchführung des Verfahrens nach Anspruch 1 oder 2, welche Vorrichtung ein Gehäuse (42), ein auf einer Printplatte (10) angeordnetes gerastertes Leuchtfeld (F) mit einzeln, gruppenweise oder gesamthaft steuerbaren Lichtquellen (14), insbesondere LED, und eine sich über das ganze Leuchtfeld (F) erstreckende, aussen ebene Streulinse (12) mit innenseitig parallel verlaufenden Nuten (18) einer wenigstens teilweise asymmetrisch gekrümmten Oberfläche (26) umfasst,
**gekennzeichnet durch**
auf der Rückseite der wenigstens teilweise transparent ausgebildeten Printplatte (10) angeordnete Sensoren (38) zum Detektieren von Licht, und eine Elektronik zur Auslösung einer Aktion beim Unterschreiten eines Schwellenwertes der umgewandelten detektierten Lichtstrahlen (16',16"), wobei der Bereich (b) zwischen den Nuten (18) der Streulinse (12) plan ausgebildet ist und parallel oder mit einem Winkel (α) leicht abgewinkeit zur aussen ebenen Oberfläche (22) verläuft.

4. Vorrichtung nach Anspruch 3, **dadurch gekennzeichnet, dass** der plan ausgebildete Bereich (b) mit einem Winkel (α) bis etwa 10°, vorzugsweise 3 bis 6°, abgewinkelt ist.

5. Vorrichtung nach Anspruch 3 oder 4, **dadurch gekennzeichnet, dass** der plan ausgebildete Bereich (b) in den Nuten (18) vorerst kontinuierlich in einen Bereich (c) mit progressiv zunehmendem Krümmungsradius (R), nach dem Erreichen eines Tangentialwinkels (β) im Bereich von 40 bis 50° kontinuierlich in einen zylindermantelförmigen Bereich (e) übergeht, welcher den nächsten plan ausgebildeten Bereich (b) schneidet.

6. Vorrichtung nach Anspruch 5, **dadurch gekennzeichnet, dass** der Krümmungsradius (R) im Bereich (c) der Nuten (18) progressiv von etwa 2 auf etwa 10 mm, vorzugsweise von etwa 2,5 auf etwa 7 mm, zunimmt, und der konstante Radius (r) im zylindermantelförmigen Bereich (e) der Nuten (18) 1 bis 3 mm, vorzugsweise etwa 1,5 mm, beträgt, wobei die Tiefe (d) der Nuten (18) im Bereich von 1 bis 3 mm, deren Abstand (a) im Bereich 10 bis 15 mm liegt.

7. Vorrichtung nach einem der Ansprüche 3 bis 6, **dadurch gekennzeichnet, dass** zwischen der Printplatte (10) und der Streulinse (12) eine innen ebene, aussen mit sphärischen Kalotten (32) ausgestattete Zwischenlinse (30) angeordnet ist, wobei die Matrix der Lichtquellen (14) derjenigen der Kalotten (32) exakt entspricht und alle Linsen (12,30) vorzugsweise auf einem Basisträger integriert sind.

8. Vorrichtung nach Anspruch 7, **dadurch gekennzeichnet, dass** die Printplatte (10) und die Zwischenlinse (30) in Richtung der Lichtquellen (14) verspiegelte, vorzugsweise abgewinkelte Bereiche hat, welche einen Teil der abgestrahlten Lichtstrahlen (16) reflektieren, wobei diese Bereiche vorzugsweise in Form von einem oder mehreren parallel verlaufenden Reflexionskämmen (36) ausgebildet sind.

9. Vorrichtung nach einem der Ansprüche 3 bis 7, **dadurch gekennzeichnet, dass** die Sensoren (38) auf der Innenseite des Gehäuses (42) angeordnet sind.

10. Vorrichtung nach einem der Ansprüche 3 bis 8 **dadurch gekennzeichnet, dass** die Innenseite des Gehäuses (42) als Reflektor von Licht ausgebildet ist.

## Claims

1. Process for monitoring the light intensity of an optical signalling or display device which has a plurality of light sources (14) arranged on the front of a printed circuit board (10) in a rasterized luminous field (F) and a diffusion lens (12) arranged in the main light emission direction of the light sources or a light-collecting intermediate lens (30) and a diffusion lens (12) arranged in sequence,
**characterized by** the process steps:
use of an at least partly transparent printed circuit board (10) for arrangement of the light sources (14);
arrangement of sensors (38) to detect light on the rear of this circuit board (10);
detection of the light beams (16') emitted rearwards towards the printed circuit board (10) by the light sources (14) and/or detection of the light beams (16") reflected at the intermediate lens (30) or, if this is omitted, at the diffusion lens (12) and passing through the printed circuit board;
conversion of the detected light beams (16', 16") into signals which are passed to an electronic system;
initiating an action such as increasing the electrical power, advance warning and/or disconnection by the electronics system when the signal values fall by a predefined threshold value.

2. Process according to claim 1, **characterized in that** the threshold value for initiating an action is at least approximately 30%, preferably in the range from 40 to 60%, of the prescribed nominal value.

3. Optical signalling or display device for performance of the process according to claim 1 or 2, which device has a housing (42), a rasterized luminous field (F) arranged on a printed circuit board (10) with light sources (14) which can be controlled individually, in groups or as a whole, and a diffusion lens (12), which is flat on the outside and extends over the entire luminous field, on the inside of which are formed parallel grooves (18) with an at least partly asymmetrically curved surface (26),
**characterized in that**
sensors (38) are arranged on the rear of the at least partly transparent printed circuit board (10) to detect light, and an electronic system to initiate an action when the value falls below a preset threshold value of the converted detected light beams (16', 16"), where the area (b) between the grooves (18) of the diffusion lens (12) is formed flat and runs parallel to or angled slightly at an angle (α) to the outer flat surface (22).

4. Device according to claim 3, **characterized in that** the flat area (b) is angled at an angle (α) of up to approximately 10°, preferably 3 to 6°.

5. Device according to claim 3 or 4, **characterized in that** the flat area (b) in the grooves (18) is initially transformed gradually into an area (c) with progressively increasing radius of curvature (R), and after reaching a tangential angle (β) in the region of 40 to 50°, is transformed gradually into an area (e) of cylinder casing shape which intersects the next flat area (b).

6. Device according to claim 5, **characterized in that** the radius of curvature ( R ) in the area (c) of the grooves (18) increases progressively from approximately 2 to approximately 10 mm, preferably from approximately 2.5 to approximately 7mm, and the constant radius ( r ) in the cylinder casing-shaped area (e) of the grooves (18) is 1 to 3 mm, preferably approximately 1.5 mm, the depth (d) of the grooves (18) is in the range from 1 to 3 mm, and their spacing (a) is in the range from 10 to 15 mm.

7. Device according to any one of claims 3 to 6, **characterized in that** an internally flat intermediate lens (30), fitted on the outside with spherical caps (32), is arranged between the printed circuit board (10) and the diffusion lens (12), whereby the matrix of light sources (14) corresponds precisely to that of the caps (32), and all lenses (12, 30 ) are preferably integrated on a carrier.

8. Device according to claim 7, **characterized in that** the printed circuit board (10) and the intermediate lens (30) have areas which are silvered facing the light source (14) and are preferably angled, which areas reflect a portion of the emitted light beams (16), where these regions are preferably constructed in the form of one or more parallel reflection combs (36).

9. Device according to any one of claims 3 to 7, **characterised in that** the sensors (38) are arranged inside of the housing (42).

10. Device according to any one of claims 3 to 8, **characterized in that** the inside of the housing (42) is constructed as a light reflector (40).

## Revendications

1. Procédé de contrôle de l'intensité lumineuse d'un dispositif optique de signalisation et d'affichage qui comporte une série de sources lumineuses (14), agencées sur la face avant d'une carte (10) de circuits imprimés en formant un champ lumineux (F) de forme quadrillée, ainsi qu'une lentille divergente (12) agencée dans la direction principale d'émission lumineuse des sources lumineuses ou une lentille intermédiaire convergente de collimation (30) et une lentille divergente (12) agencées en séquence,
**caractérisé en ce qu'**il comprend les étapes consistant à :
utiliser une carte (10) de circuits imprimés au moins partiellement transparente pour l'agencement des sources lumineuses (14);
agencer des capteurs (38) pour détecter une lumière sur la face arrière de cette carte (10) de circuits imprimés,
détecter les rayons lumineux (16') émis par les sources lumineuses (14) vers l'arrière en direction de la carte (10) de circuits imprimés et/ou détecter les rayons lumineux (16") réfléchis à la lentille intermédiaire (30) ou, en l'absence de celle-ci, à la lentille divergente (12) et pénétrant la carte de circuits imprimés;
transformer les rayons lumineux détectés (16', 16") en signaux qui sont transmis à une électronique;
déclencher au moyen de l'électronique un effet comme une élévation de la puissance électrique, un avertissement préalable et/ou une déconnexion lorsqu'une valeur de seuil prédéfinie des signaux n'est pas atteinte.

2. Procédé selon la revendication 1, **caractérisé en ce que** la valeur de seuil du déclenchement d'un effet est au moins d'environ 30% de la valeur de consigne prédéfinie, de préférence dans la plage de 40 à 60%.

3. Dispositif optique de signalisation et d'affichage pour la mise en oeuvre du procédé selon la revendication 1 ou 2, dispositif qui comprend un carter (42), un champ lumineux quadrillé (F) agencé sur une carte (10) de circuits imprimés et comportant des sources lumineuses (14), en particulier des diodes électroluminescentes ou LED qui sont réglables, soit individuellement, soit par groupes, soit toutes ensemble, et une lentille divergente extérieurement plane (12) qui s'étend sur tout le champ lumineux (F) et comporte des rainures parallèles agencées sur la face interne d'une surface (26) incurvée au moins en partie de façon asymétrique,
**caractérisé par** des capteurs (38) de détection de lumière agencés sur la face arrière de la carte (10) de circuits imprimés au moins partiellement transparente et une électronique de déclenchement d'un effet lorsqu'une valeur de seuil des rayons lumineux détectés transformés (16', 16") n'est pas atteinte, la zone (b) entre les rainures (18) de la lentille divergente (12) étant de configuration plane et parallèle à la surface extérieure plane (22) ou légèrement inclinée d'un angle (α) par rapport à celle-ci.

4. Dispositif selon la revendication 3, **caractérisé en ce que** la zone (b) de configuration plane est inclinée d'un angle (α ) pouvant atteindre environ 10°, de préférence de 3 à 6°.

5. Dispositif selon la revendication 3 ou 4, **caractérisé en ce que** la zone (b) de configuration plane dans les rainures (18) se raccorde d'abord de façon continue dans une zone (c) à rayon de courbure progressivement croissant (R) et se raccorde en continu, lorsqu'un angle tangentiel (β) dans une plage de 40 à 50° a été atteint, dans une zone (e) en forme de virole cylindrique qui coupe la zone suivante de structure plane (b).

6. Dispositif selon la revendication 5, **caractérisé en ce que** le rayon de courbure (R) augmente progressivement d'environ 2 à environ 10 mm dans la zone (c) des rainures (18), de préférence d'environ 2,5 à environ 7 mm, le rayon constant (r) dans la zone (e) en forme de virole cylindrique des rainures (18) est de 1 à 3 mm, de préférence environ 1,5 mm, la profondeur (d) des rainures (18) dans la zone est de 1 à 3 mm, et leur distance (a) est dans une plage de 10 à 15 mm.

7. Dispositif selon l'une quelconque des revendications 3 à 6, **caractérisé en ce qu'**une lentille intermédiaire (30) intérieurement plane, comportant à l'extérieur des calottes sphériques (32) est agencée entre la carte (10) de circuits imprimés et la lentille divergente (12), que la matrice des sources lumineuses (14) correspond exactement à celle des calottes (32) et que toutes les lentilles (12, 30) sont de préférence intégrées sur un support de base.

8. Dispositif selon la revendication 7, **caractérisé en ce que** la carte (10) de circuit imprimé et la lentille intermédiaire (30) comportent des zones pourvues d'une couche réfléchissante en direction des source lumineuses (14) et de préférence inclinées, qui reflètent une partie des rayons lumineux émis (16), et que ces zones consistent de préférence en un ou plusieurs peignes de réflexion (36) de tracés parallèles.

9. Dispositif selon l'une quelconque des revendications 3 à 7, **caractérisé en ce que** les capteurs (38) sont agencés sur le côté interne du carter (42).

10. Dispositif selon l'une quelconque des revendications 3 à 8, **caractérisé en ce que** le côté interne du carter (42) consiste en un réflecteur de lumière (40).
